# EUROPEAN PATENT APPLICATION

(11) **EP 2 264 420 A1**
(43) Date of publication of application: **22.12.2010**
(21) Application number: 09163304.0
(22) Date of filing: 19.06.2009
(51) Int. Cl.: G01M 11/00, G02B 6/38

(54) **Optical reflective marker adaptor for a patch cord in OTDR applications**

(71) Applicant: Acterna, LLC, Germantown, MD 20876 (US)
(72) Inventor: Champavere, André, Le Clos Du Bourg (FR)
(74) Representative: Harrison Goddard Foote

(57) **Abstract**

Fiber optic connectors on patch cords, or other connectorized and fiber pigtailed devices, are converted to wavelength reflective markers for optical testing using an adaptor, based on a thin film deposition on the fiber end face of a non angled ferrule without any adhesive in the light path, i.e. epoxy free type, which makes the reflective marker compatible with high power light. Furthermore, the surface of the filter is accessible for cleaning or verification. In addition, a locking mechanism is provided that prevents access to the conventional coupling mechanisms between connectors unless a special tool is utilized.

## Description

### TECHNICAL FIELD

The present invention relates to a reflective marker for a passive optical network, and in particular to an adaptor with a thin film reflective marker deposited on a connector of a patch cord or other connectorized device.

### BACKGROUND OF THE INVENTION

Many applications in the telecom and fiber sensor technology domains require in-line fiber optic filters, which reflect part of the optical spectrum and transmit the rest, to be placed at various location throughout the network. In the testing field, reflective devices disposed in-line are used as markers monitored by test instruments, e.g. optical time domain reflectometers. The optical reflectometer is the basic tool for testing and monitoring fiber optical networks or fiber optic sensors.

The main performances of the reflectometers are defined in terms of dynamic range and close events spatial resolution. Unfortunately, reflectometers cannot be used when the network budget loss is too high in comparison with the dynamic range of the instrument, which is the case with PONs (passive optical networks). A way to extend the measurement range of the reflectometers is to insert, in the network, high reflective markers that emerge from the noise floor of the instrument. PONs are very demanding in terms of both dynamic range and resolution, in particular, due to attenuation caused by 1xN splitters, which increases the budget loss of these point to multi-point networks. One way to test a PON network is to monitor out-of-band, e.g. U Band, reflective events created by markers inserted in the network, which are often located at the customer side of the network.

Today, different solutions can be used to generate high reflectance events on the reflectometer trace. Fiber Bragg Gratings ( FBG) can be used as well as fiber end-face coatings (FEFC). FBG and FEFC design requires handling of a fiber pigtail during the manufacturing process; however, this limitation reduces the use of these techniques for low cost mass production: First, mass production requires producing high-quantity batches, e.g. thousands of fibers, which have to be handled during the process. Secondly, as the reflective device is part of the patch cord, as many fiber lengths or fiber types have to be managed as have to be produce. Unfortunately, the multiple configurations of fiber length and type leads to excess inventory issues.

Thirdly, FBG reflected light is in a limited optical bandwidth, i.e. much smaller than most of the reflectometers lasers spectral widths and not compatible with both 1625nm and 1650nm OTDR. To overcome this difficulty, specific FBG types, e.g. chirped FBG have to be used to broaden the reflected spectrum; however, extending this techniques to work on all the 1625-to-1675nm U Band leads to technical complexity and extra-cost, e.g. when embedded in plug-adapter connectors, chirped filters must be shorter than the connector ferrules. The reflection bandwidth of a fiber grating depends on both the strength of the refractive index modulation and the length, i.e. the FBG length increasing with the BW. Accordingly, designing a U band FBG typically leads to too complex or too long of a FBG length compared to the length of the adapter stub.

Thin-film filters (TFF), typically made of a multiple thin film layers deposited onto the end of an optical fiber, used in the reflected mode for a selected range of wavelengths can't be deposited on angled fiber ends (APC). Accordingly, current TFF reflective marker solutions are based on the deposition of thin film filters on non angled connectors or fibers.

One of the more significant drawbacks of fiber end deposition is the necessity to deposit the TFF filter on the fiber end face with some length of optical fiber present in the deposition chamber during the deposition process with the risk of fiber optic coating degassing and a clear limitation on the maximum quantity per coating run, thereby limiting mass production for low cost objectives.

Moreover, since each TFF filter is physically associated with each fiber, and multiple lengths of fiber and multiple types of fiber are often required, inventory management becomes a serious issue.

The angled physical contact (APC) connector is the leader for high end applications, since it offers the lowest reflectance characteristics of current connectors. When using connectors like APC connectors, filters deposited on the non perpendicular facet of their single-mode fiber reflect light into the cladding where it cannot reflect back to the source. By design APC connectors are not compatible with fiber end face reflective filters. United States Patent No 5,805,760 issued September 8, 1998 to Serafini et al discloses a pair of ferrules with mating angled surfaces, between which a filter is disposed. Unfortunately, the conventional assembly requires an additional part, i.e. a vitreous support, to be glue on one of the two ferrules, which results in the presence of adhesive in the light path leading to optical power limitation.

An alternate solution comprises limiting the TFF coating to (non angled) PC connector types fiber end face, such as the one disclosed in United States Patent No 6,712,523, issued March 30, 2004 to Steven Zimmel, which greatly limits the application of the resultant reflective markers and prevents and inspection of the filter after assembly. Unfortunately, this assembly also requires additional part, i.e. a vitreous support on which the filter is deposited. Furthermore, the filter is placed between two fiber segments that are not physically touching the filter creating additional and undesirable broadband optical reflection.

Another solution includes depositing the TFF on the fiber face of a PC connectorized fiber and using a PC/APC adapter/converter; however, that doesn't solve the problems of having the fiber pigtail in the deposition chamber or of being expensive. Furthermore, if one attempts to connect an FC/PC patch cord to a FC/APC connector significant damage can occur to the fiber connectors. Risk of damage to the TFF can also occur during normal handling of the aforementioned designs, because the user has direct access to the filter surface. In addition, the fiber optic jumper exposes the filter coating to potential damage due to aging or mating/unmating cycles.

An object of the present invention is to overcome the shortcomings of the prior art by providing an APC fiber patch cord with a TFF reflective marker protected from damage.

### SUMMARY OF THE INVENTION

Accordingly, the present invention relates to a an adapter for connecting to a first connector on an end of an optical fiber, comprising:

a second connector for receiving the first connector;

a fiber stub having a longitudinal axis, the fiber stub having a first end perpendicular to the longitudinal axis thereof for mating with the end surface of a ferrule of the first connector, and a second end at an acute angle to the longitudinal axis thereof; and

a multi-layer wavelength selective optical coating filter on the first end of the fiber stub for reflecting a predetermined wavelength channel from a plurality of wavelength channels transmitted on the optical fiber.

Another feature of the present invention relates to an optical fiber patch cord comprising:

a length of optical fiber;

a first connector on one end of the optical fiber;

a second connector on the other end of the optical fiber having a ferrule with an end surface perpendicular to the longitudinal axis thereof; and

an adapter engaged with the second connector, comprising:

a third connector for receiving the second connector;

a fiber stub having a longitudinal axis, the fiber stub having a first end perpendicular to the longitudinal axis thereof for mating with the end surface of the ferrule of the second connector, and a second end at an acute angle to the longitudinal axis thereof; and

a multi-layer wavelength selective optical coating filter on the first end of the fiber stub for reflecting a predetermined wavelength channel from a plurality of wavelength channels transmitted on the optical fiber.

Another feature of the present invention relates to a system for testing a passive optical network (PON) comprising:

testing equipment including an optical time domain reflectometer coupled at one end of the PON for generating a test signal;

a multiplexer for combining the test signal with optical traffic on the PON; and

the above-identified patch cord coupled to the PON for receiving the test signal and reflecting at least a portion of the test signal back to the testing equipment.

### BRIEF DESCRIPTION OF THE DRAWINGS

The invention will be described in greater detail with reference to the accompanying drawings which represent preferred embodiments thereof, wherein:

Figure 1 is a cross-sectional view of a patch cord with a reflective marker in accordance with the present invention

Figures 2a to 2h illustrate an assembly process of the patch cord of Fig 1;

Figure 3 is cross-sectional view of an end of the patch cord of Fig. 1;

Figures 4a is a conventional SC fiber optic adapter;

Figure 4b is a side view of a lockable adapter in accordance with the present invention;

Figure 4c is a top view of the lockable adapter of Fig. 4b; and

Figure 5 illustrates a PON network with testing equipment including the reflective marker of the present invention.

### DETAILED DESCRIPTION

The present invention converts any fiber optic connectors on patch cords, or other connectorized and fiber pigtailed devices, to a high reflectance marker device. The device of the present invention is based on a thin film deposition on the end face of a non angled ferrule without any adhesive in the light path , i.e. epoxy free type, that makes the marker compatible with high power light, while enabling the filter surface to be user accessible for cleaning or verification.

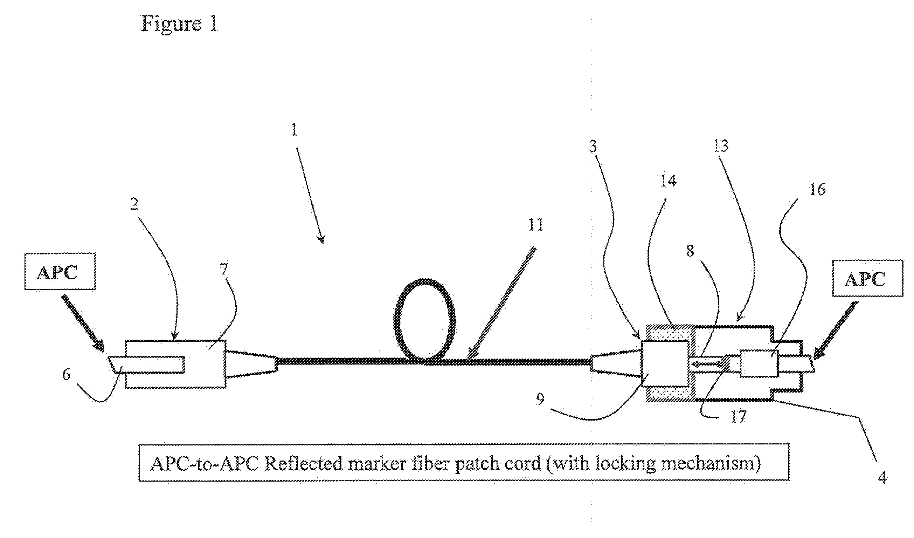

With reference to Figure 1, a patch cord 1 of the present invention, includes an APC connector 2 on one end thereof, a PC connector 3 on the other end thereof, and a PC/APC adaptor/reflective marker 4 mounted on the PC connector 3. The APC connector 2, preferably male, includes an angled ferrule 6 extending from a first conventional connector housing 7, e.g. LC, SC etc, including a coupling feature, e.g. snap or push pull, for connecting the patch cord 1 to a mating connector. The PC connector 3, preferably male, includes a flat ended ferrule 8 extending from a second conventional connector housing 9, e.g. LC, SC, depending on the requirements of the network with coupling features, e.g. snap or push pull, as is known in the art. An optical fiber 11, which is also dependent upon the network application, e.g. single mode fiber (SMF) or multi-mode fiber (MMF), extends between the first and second ferrules 6 and 8.

The PC/APC adaptor 4 is comprised of an adaptor housing 13 with coupling features, preferably female, for mating with the coupling features of the connector 3, a locking mechanism 14 for preventing disengagement of the coupling features of the PC/APC adaptor 4 from coupling features of the PC connector 3, and a one or two-piece fiber stub 16 mounted in the adaptor housing 13 optically aligned with the second ferrule 8, with thin film filter marker 17 there between.

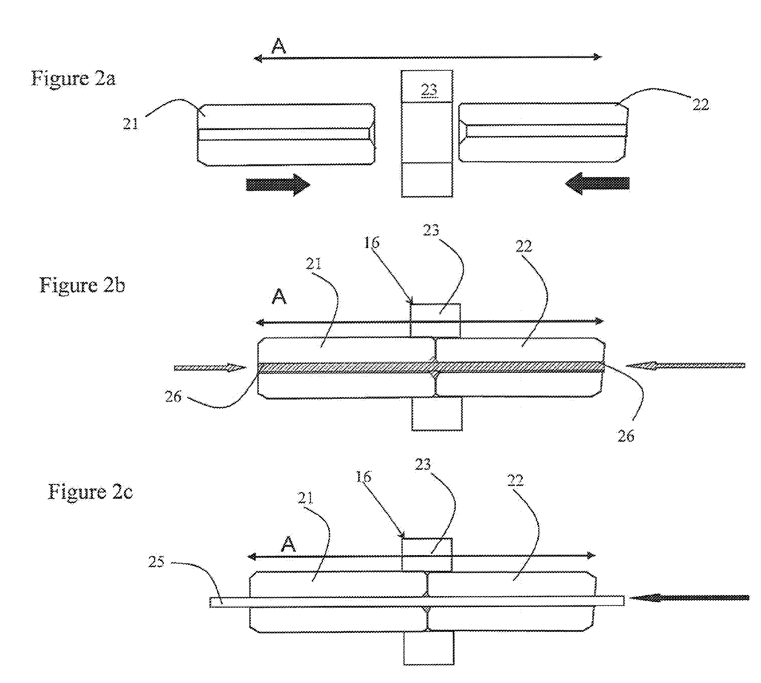

In the embodiment illustrated in Figures 2a to 2h, the fiber stub 16 includes first and second fiber stub sections 21 and 22, respectively, surrounding a piece of optical fiber 25, e.g. single mode fiber without any attenuation. Two piece stubs are easier to obtain from standard connector ferrule suppliers and can be used to build different types of fiber stubs, e.g. APC/PC. The first fiber stub section 21 has parallel end faces perpendicular to the longitudinal axis of the fiber stub 16, i.e. perpendicular to the direction of travel of the optical signal passing therethrough. The TFF filter 17 is deposited on an outer free end of the first fiber stub section 21 adjacent to the end of the second ferrule 8. The second fiber stub section 22 has an inner end face parallel to and abutting an inner end of the first fiber stub 21, and an outer free end with an angled surface, i.e. at an acute angle, e.g. 8° to 9°, to the inner end. The outer free end of the second fiber stub 22 forms an APC end, thereby making the patch cord 1 an APC/APC patch cord. Ideally, a mounting sleeve 23, surrounding the inner end faces of the first and second fiber stub sections 21 and 22, respectively, is used to hold the first and second fiber stub sections 21 and 22 together, but other forms or means of connection are within the scope of the invention.

The PC/APC adaptor 4 also includes a cylindrical sleeve, e.g. split sleeve, 24 for receiving an outer free end of the ferrule 8 and the outer free end of the fiber stub 16, e.g. the first fiber stub section 21, thereby aligning and optically coupling the fiber 11 with the fiber stub 16.

With reference to Figures 2a to 2h, a process for producing the reflective marker 1 comprises: inserting and fixing the first and second fiber stub sections 21 and 22 into the mounting sleeve 23, as in Figure 2a. At this point the overall length of the fiber stub 16 is measured to ensure the distance A is the desired length. An end of one of the first and second fiber stub sections 21 and 22 can be cut and/or polished to obtain the desired length A.

An epoxy resin 26 is injected into the ends of the first and second fiber stub sections 21 and 22 using any suitable means, e.g. a syringe, as in Figure 2b, and then a piece of optical fiber 25, having a length longer than the distance A, is inserted through one end of the first or second fiber stub section 21 and 22 until the ends of the piece of optical fiber 25 extend out opposite ends of the first and second stub sections 21 and 22, as in Figure 2c. The epoxy resin is then left to cure.

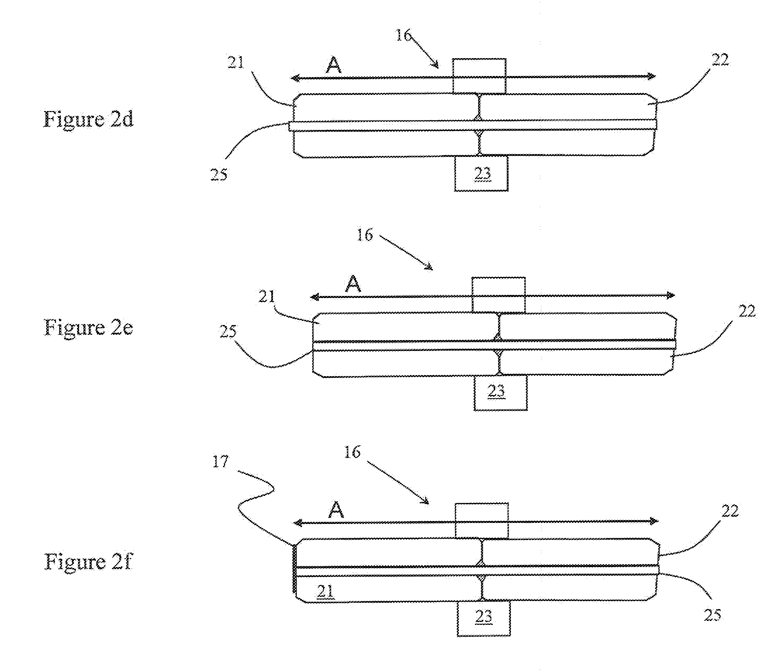

With reference to Figure 2d, the extra length of the optical fiber 25 extending out of the first and second fiber stub sections 21 and 22 is cut off. The first and second fiber stub sections 21 and 22 are then polished, whereby the ends of the optical fiber 25 are co-planar with the ends of the first and second fiber stub sections 21 and 22, i.e. one end of the optical fiber 25 is perpendicular to the longitudinal axis of the first fiber stub section 21, and the other end of the optical fiber 25 is at an acute angle to the longitudinal axis of the second fiber stub section 22.

In the next two steps illustrated in Figures 2e and 2f, the non angled side of the first (U)PC fiber stub section 21 is polished, and the optical filter 17 is coated on the outer non-angled end face of thereof. The coating step can also include depositing a final capping layer of SiO₂, and polishing the capping layer to improve contact between the ferrule 8 and the fiber stub 16.

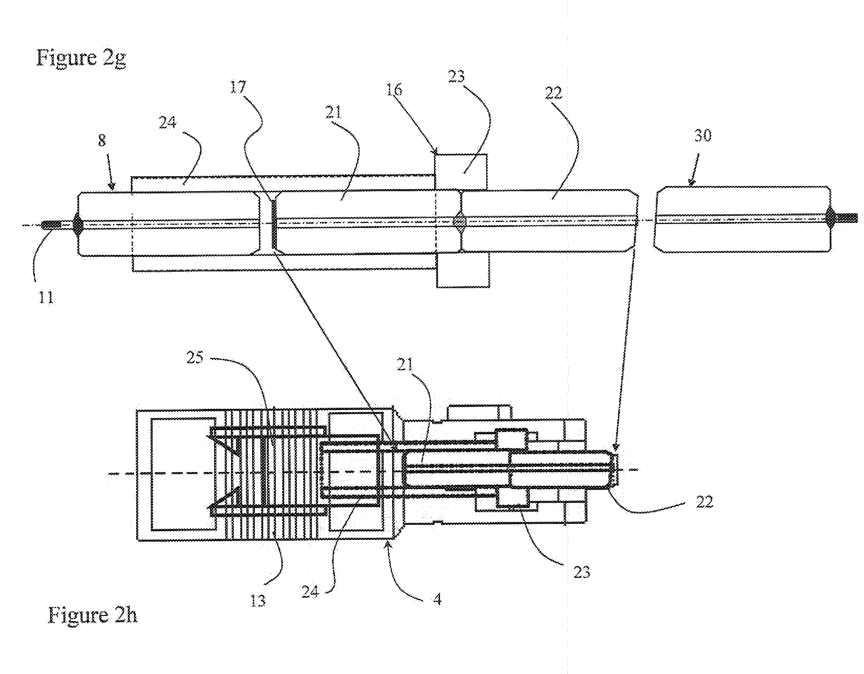

With reference to Figures 2g and 2h, the fiber stub 16 is mounted in the PC/APC adapter 4 with a split sleeve 24 mounted on the first fiber stub section 21 providing a female connector for receiving the ferrule 8, thereby guaranteeing axial alignment of the first fiber stub section 21 and the connector ferrule 8. A suitable mechanical latch 25, e.g. spring fingers, can be provided for locking the second (male) connector to the third (female) connector in the adaptor 4. The angled APC side of the second fiber stub section 22 is then polished to the desired angle.

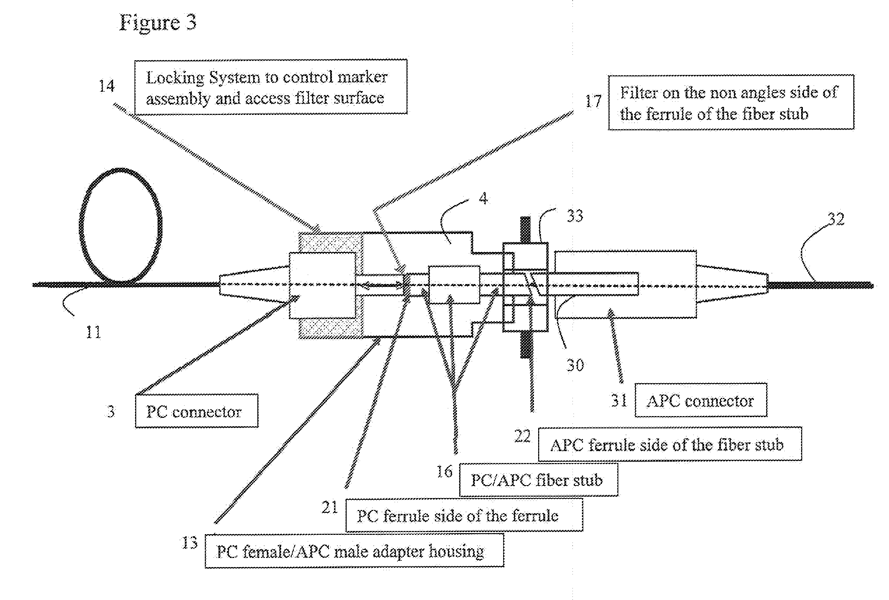

With reference to Figure 3, the angled outer end of the second fiber stub section 22 can then be aligned with an APC ferrule 30 of another optical connector 31, connected on the end of an optical fiber 32 using a conventional bulkhead adaptor 33 for connecting male to male or male to female connectors. A non-reflecting wavelength selective filter can be disposed, e.g. coated, on the angled outer end of the second fiber stub section 22 for directing a selected wavelength channel or band into the cladding of the fiber stub 16, so that the selected wavelength channel or band is filtered out of the signal, but not reflected back through the fiber 11. The non-reflective filter can also be disposed on the first APC connector 2, e.g. on the end of the ferrule 6 or in a separate adaptor mounted thereon.

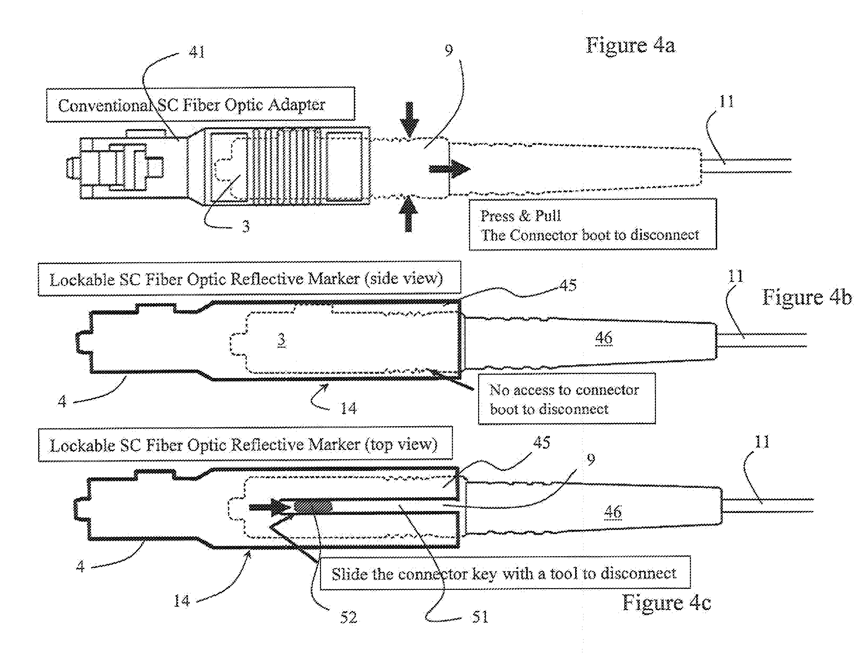

With reference to Figure 4a, conventional, e.g. SC, connectors offer a quick interconnect based on a push-pull coupling system. Accordingly, when a conventional PC/APC adaptor 41 is connected to the connector 3, the connector 3 can be easily disconnected by pulling on the connector housing 9.

Accordingly, with reference to Figures 4b and 4c, the present invention also includes the locking mechanism 14 that enables the manual assembly of the PC/APC adaptor 4 with any connectorized devices, e.g. connector 3. The locking mechanism 14 can be unlocked using a very simple tool in order to disassemble the connector 3 from the PC/APC adaptor 4 or give access to the TF filter 17 for cleaning or other operations.

The locking mechanism 14 disables the normal disconnection of the connector 3 using the reciprocating connector housing 9 by providing a sleeve 45, which extends beyond the connector housing 9 to the optical fiber/strain relief portion 46 of the optical fiber 11, thereby completely covering the connector housing 9 and removing direct access thereto. In such a condition, the user cannot separate the PC connector 3 from the PC/APC adapter 4 by pulling on the connector housing 9, since the connector housing 9 is inaccessible beneath the sleeve 45. Pulling either on the connector boot 46 or on the optical fiber 11 doesn't unlock the system.

In a preferred embodiment, the release features of the locking mechanism includes a slot 51 extending from and end of the sleeve 45 along a longitudinal axis of the sleeve 45, i.e. along the longitudinal axis of the fiber 11, and a connector key feature 52 extending from the connector 3 into the slot 51.

If for maintenance or other specific purposes, a technician or expert, who wants to disassemble/separate the PC/APC adaptor 4 with the reflective marker from the connector 3, can use a very simple tool to unlock the device by sliding the connector key 52 along the slot 51 in the sleeve 45 until the connector housing 9 can be accessed and reciprocated to disconnect the connector 3 from the PC/APC adaptor 4.

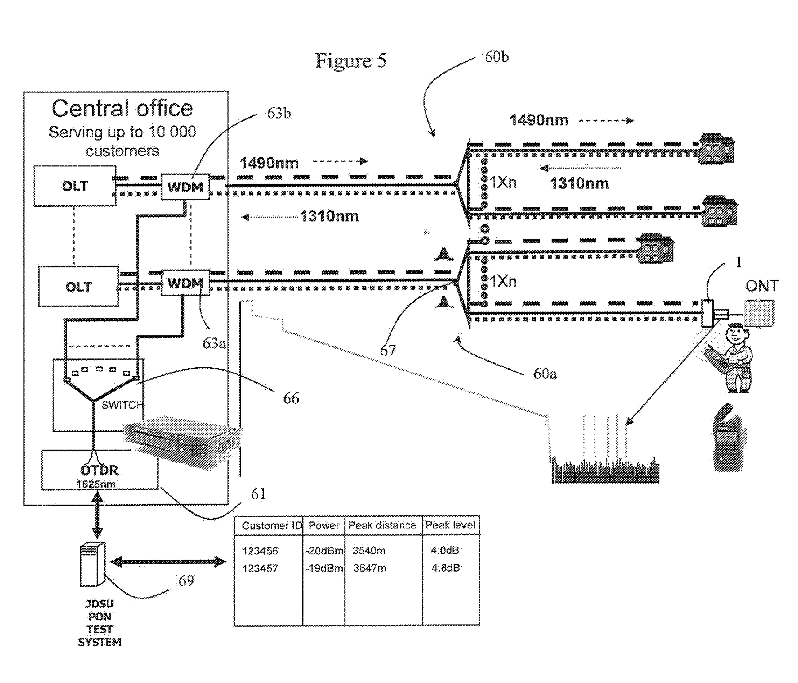

The marker reflectance can be wavelength selective in order to be used on a define wavelength range for fiber optic monitoring applications (telecommunications or fiber optic sensing). Figure 5 illustrates a typical PON monitoring application in which the patch cord 1 is connected to the optical network terminal (ONT), i.e. customer, side of a first optical network 60a, while the optical time domain reflectometer 61 (OTDR) is located on the optical line termination (OLT), i.e. central office side of the network 60a. The OTDR signal, which is typically U Band compatible at 1625 nm or 1650 nm with a possible wavelength range from 1615 nm up to 1675 nm, is multiplexed with the other optical traffic signal, e.g. 1310 nm upstream and 1490 nm downstream, using a wavelength selective fiber coupler, e.g. a WDM 63a. Multiple patch cords 1, each with a filter 17 for reflecting the OTDR wavelength, can be disposed at various locations throughout the network 60a for testing the transmission of optical signals to those various locations. An optical switch 66 can be used to enable a single OTDR 61 to sequentially scan additional PONs, e.g. 60b, each with their own WDM, e.g. WDM 63b.

When testing the PON 60a with the OTDR 61, the test signal is strongly attenuated by 1xN splitters 67 disposed therein, which separate main branches into multiple N sub-branches. Due to their relatively short fiber lengths and the combination of the contributions generated by the N sub-branches between the 1xN splitter 67 and the N ONT's, the OTDR 61 has to be used in short pulse widths mode to achieve a high spatial resolution, because the OTDR short pulse widths offer lower dynamic ranges than the long ones. In such a condition, a way to locate the ONTs with an OTDR 61, is to insert a reflective marker at the end of each sub-branch that creates a peak emerging from the noise floor at a different wavelength than the other reflective markers. The peaks are received and measured using the OTDR 61 and monitored by the test equipment 69 disposed somewhere in the network 60a, preferably at the central office. The measurements can be used to spatially differentiate ONTs connected to sub-branches that have similar lengths by comparing the time it takes for the different wavelength peaks to return to the testing equipment 69, and to estimate budget losses using the peak amplitude by comparing the original amplitude to the returned peak amplitude. Partially reflective markers can be used in serial mode along the network 60a to add intermediate measurement points.

The reflective marker can be used either an adapter on the ONT connecter or the optical patchcord 1 connected to the ONT. As an example, if the marker is added after the PON network installation, a standard APC-to-APC patch cord can be replaced by the APC/APC reflecting patch cord 1, in accordance with the present invention.

## Claims

1. An optical fiber patch cord comprising:
a length of optical fiber;
a first connector on one end of the optical fiber;
a second connector on the other end of the optical fiber having a ferrule with an end surface perpendicular to the longitudinal axis thereof; and
an adapter engaged with the second connector, comprising:
a third connector for receiving the second connector;
a fiber stub having a longitudinal axis, the fiber stub having a first end perpendicular to the longitudinal axis thereof for mating with the end surface of the ferrule of the second connector, and a second end at an acute angle to the longitudinal axis thereof; and
a multi-layer wavelength selective optical coating filter on the first end of the fiber stub for reflecting a predetermined wavelength channel from a plurality of wavelength channels transmitted on the optical fiber.

2. The optical fiber patch cord according to claim 1,wherein the second connector includes a coupling feature for engaging and disengaging the second connector from the adapter; and
wherein the adaptor further comprises a locking mechanism for enclosing the coupling feature, and preventing direct access to the coupling feature, thereby preventing the second connector from being disconnected from the third connector while the locking mechanism is engaged.

3. The optical fiber patch cord according to claim 2, wherein the second connector includes a key extending therefrom; and wherein the locking mechanism comprises a slot for receiving the key; whereby disengagement of the adaptor from the second connector requires sliding the key down the slot until the coupling feature is uncovered.

4. The optical fiber patch cord according to claim 1, wherein the fiber stub comprises:
a first fiber stub section with the first end and an inner end parallel to the first end;
a second fiber stub section with the second end and an inner end adjacent and parallel to the inner end of the first fiber stub section; and
a piece of optical fiber extending through the first and second fiber stub sections, with one end coplanar with the first end of the first fiber stub, and another end coplanar with the second end of the second fiber stub section.

5. The optical fiber patch cord according to claim 4, wherein the fiber stub section also includes a sleeve for receiving the first and second fiber stub sections.

6. The optical fiber patch cord according to claim 4, wherein the third connector includes a split sleeve mounted on the first end of the first fiber stub section for receiving the ferrule of the second connector, and a mechanical latch for locking the second and third connectors together.

7. The optical fiber patch cord according to claim 4, wherein the acute angle is between 8° and 9°.

8. The optical fiber patch according to claim 4, further comprising a non-reflecting wavelength selective filter on the second end of the fiber stub for directing a selected wavelength into cladding of the fiber stub.

9. A system for testing a passive optical network (PON) comprising:
testing equipment including an optical time domain reflectometer coupled at one end of the PON for generating a test signal;
a multiplexer for combining the test signal with optical traffic on the PON; and
the optical fiber patch cord according to claim 1 coupled to the PON for receiving the test signal and reflecting at least a portion of the test signal back to the testing equipment.

10. The system according to claim 8, further comprising a switch for selectively connecting the testing equipment to multiple PONs.

11. The system according to claim 8, wherein the test signal is at a selected wavelength between 1615 nm and 1675 nm.

12. An adapter for connecting to a first connector on an end of an optical fiber, comprising:
a second connector for receiving the first connector;
a fiber stub having a longitudinal axis, the fiber stub having a first end perpendicular to the longitudinal axis thereof for mating with the end surface of a ferrule of the first connector, and a second end at an acute angle to the longitudinal axis thereof; and
a multi-layer wavelength selective optical coating filter on the first end of the fiber stub for reflecting a predetermined wavelength channel from a plurality of wavelength channels transmitted on the optical fiber.

13. The adapter according to claim 12, wherein the first connector includes a coupling feature for engaging and disengaging the first connector from the adapter; and
wherein the adaptor further comprises a locking mechanism for enclosing the coupling feature, and preventing direct access to the coupling feature, thereby preventing the first connector from being disconnected from the second connector while the locking mechanism is engaged.

14. The adapter according to claim 13, wherein the first connector includes a key extending therefrom; and wherein the locking mechanism comprises a slot for receiving the key; whereby disengagement of the adaptor from the first connector requires sliding the key down the slot until the coupling feature is uncovered.

15. The adapter according to claim 12, wherein the fiber stub comprises:
a first fiber stub section with the first end and an inner end parallel to the first end;
a second fiber stub section with the second end and an inner end adjacent and parallel to the inner end of the first fiber stub section; and
a piece of optical fiber extending through the first and second fiber stub sections, with one end coplanar with the first end of the first fiber stub, and another end coplanar with the second end of the second fiber stub section.

16. The adapter according to claim 12, wherein the second connector includes a split sleeve mounted on the first end of the first fiber stub section for receiving the ferrule of the first connector, and a mechanical latch for locking the first and second connectors together.

17. The adapter according to claim 12, further comprising a non-reflecting wavelength selective filter on the second end of the fiber stub for directing a selected wavelength into cladding of the fiber stub.
